(19) Europäisches Patentamt
European Patent Office
Office européen des brevets

(11) **EP 2 325 675 A2**

(12) **EUROPEAN PATENT APPLICATION**

(43) Date of publication:
**25.05.2011 Bulletin 2011/21**

(51) Int Cl.:
***G02B 1/11*** *(2006.01)*

(21) Application number: **10007513.4**

(22) Date of filing: **20.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.07.2009 JP 2009178333**

(71) Applicant: **Canon Kabushiki Kaisha**
**Ohta-ku**
**Tokyo (JP)**

(72) Inventors:
• **Tanaka, Hiroyuki**
**Tokyo (JP)**
• **Kobayashi, Motokazu**
**Tokyo (JP)**

(74) Representative: **Weser, Wolfgang**
**Weser & Kollegen**
**Patentanwälte**
**Radeckestrasse 43**
**81245 München (DE)**

(54) **Method for producing optical film, optical film, and optical component**

(57)    A method for producing an optical film formed of a porous film containing magnesium (Mg) and fluorine (F) includes the steps of applying, onto a base (11), a solution containing a fluorine-containing organomagnesium compound represented by general formula (1):

$$(CF_3\text{-}X\text{-}COO)_2Mg \qquad \text{General formula (1)}$$

wherein X represents a single bond or $-(CF_2)_n-$, $-(CH_2)m-$, or $-(CF_2)_n-(CH_2)_m-$ which may have a substituent, and n and m each represent an integer of 1 to 4, to form a coating film (12); and heat-treating the coating film in an atmosphere containing a fluorine compound in a shielded space (15) to obtain a porous film containing Mg and F.

# FIG. 1A

**(Cont. next page)**

# FIG. 1B

**Description**

BACKGROUND OF THE INVENTION

Field of the Invention

The present invention relates to a method for producing an optical film, an optical film, and an optical component. In particular, the present invention relates to a method for producing an optical film that exhibits an excellent antireflection effect and that has a low refractive index, the optical film, and an optical component including the optical film.

Description of the Related Art

An antireflection coating film is provided on a surface of an optical component constituting an optical apparatus in order to improve light transmittance. It is known that when a low-refractive-index material having a refractive index nc of nc = √ng is coated on a base having a refractive index ng in air so as to have an optical film thickness of $\lambda/4$ (wherein $\lambda$ is a design wavelength), the reflectivity theoretically becomes zero.

A typical antireflection coating film is formed by depositing a material having a refractive index lower than that of a substrate by vacuum evaporation. Cryolite ($3NaF \cdot AlF_3$, nd = 1.339) is known as a low-refractive-index material, but magnesium fluoride ($MgF_2$, nd = 1.38), which is superior to cryolite in terms of the strength, is widely used. Here, nd is the refractive index to light with a wavelength of 587 nm.

When a magnesium fluoride film (nd = 1.38) having an optical film thickness of $\lambda/4$ is provided on an optical glass BK7 substrate (nd = 1.52), a remaining reflectivity of 1.26% is generated. In this case, in order to control the reflectivity to be zero, it is necessary that the refractive index nc satisfy equation (1):

$$nc = \sqrt{nd}\ (BK7) = \sqrt{1.52} = 1.23 \qquad Equation\ (1)$$

As an antireflection coating film of an optical device that requires a lower reflection effect, a multilayer film in which high-refractive-index films and low-refractive-index films are alternately stacked is used instead of the single layer film. Also in this case, it is important that a low-refractive-index material be used as the top layer located on the air side.

Reflectivity characteristics can be further improved by forming, on a low-refractive-index film, an optical film having a refractive index lower than that of the low-refractive-index film. In the case where a low-refractive-index film is deposited on the magnesium fluoride film (nd = 1.38), the best result can be obtained when, as in equation (1), the refractive index nc satisfies equation (2):

$$nc = \sqrt{nd}\ (MgF_2) = \sqrt{1.38} = 1.17 \qquad Equation\ (2)$$

Thus, by using a material having a lower refractive index as an optical film, an excellent antireflection function can be obtained in a wider wavelength range than before, and this is also suggested by a simulation.

Trials of the use of a porous film have been widely performed as a method for obtaining a low-refractive-index film. When a material A (refractive index $n_A$) and a material B (refractive index $n_B$) having different refractive indices are mixed in a ratio of p:1 - p, the apparent refractive index n is represented by equation (3).

$$n = n_A \times p + n_B \times (1 - p) = n_B - p \times (n_B - n_A)$$

$$Equation\ (3)$$

Here, p represents the porosity. It is suggested that, in order to obtain a low-refractive-index film, forming a porous film with a gas (in ordinary cases, air), the refractive index of which is nearly equal to 1, is advantageous. When the material A is air, $n_A \approx 1$ and equation (3) above is represented by equation (4).

$$n = n_B - p \times (n_B - 1) \quad \text{Equation (4)}$$

That is, the apparent refractive index n is the refractive index of a material having a bulk refractive index $n_B$ when the material has a porosity p. In order to form a porous film having an apparent refractive index n of 1.23 using magnesium fluoride (nd = 1.38) as a low-refractive-index material, it is necessary to control the porosity to be about 40%.

An effective method for preparing a porous film is not a dry process such as vacuum evaporation but a wet process. In such a wet process, a coating material is dissolved or dispersed in a solvent, and a film of the coating material is then formed by any of various coating methods. Thus, the wet process is advantageous in that a porous film can be easily prepared.

The following methods are known as methods for producing magnesium fluoride by a wet process. Japanese Patent Laid-Open No. 59-213643 discloses a method for producing magnesium fluoride by disproportionation reaction by heat treatment (hereinafter also referred to as "thermal disproportionation reaction"). A fluorine-containing magnesium compound or a precursor thereof is applied onto a substrate and is then disproportionated to produce magnesium fluoride. However, in any case, the resulting magnesium fluoride merely has a refractive index of approximately 1.39, which is the refractive index of bulk magnesium fluoride.

PCT Publication No. WO2002/018982 discloses a method for producing a sol solution of magnesium fluoride fine particles. Magnesium acetate is reacted with an aqueous solution of hydrofluoric acid, and the resulting product is then treated in an autoclave at a high temperature and a high pressure to produce magnesium fluoride fine particles. The magnesium fluoride fine particles are applied, thereby preparing a low-refractive-index film. In this case, the refractive index is 1.256 (a value at $\lambda$ = 193 nm), which is lower than the refractive index of bulk magnesium fluoride. However, when a film is formed by applying fluoride fine particles onto a substrate, the resulting film has an insufficient strength.

As for a method for improving the film strength, PCT Publication No. WO2005/120154 discloses a method in which a scratch-resistant coating is prepared by mixing a magnesium fluoride sol with a metal/nonmetal sol. Although no specific value of the refractive index is described in a combination of a magnesium fluoride sol and a silica sol, the refractive index estimated from the transmittance is close to the value of bulk silica (nd = 1.46 to 1.47).

PCT Publication No. WO2006/030848 discloses a combination of a sol solution of magnesium fluoride fine particles and a silica binder. The film strength is increased by using the silica binder. However, since the adhesion force between the magnesium fluoride fine particles or between a substrate and the magnesium fluoride fine particles is low, satisfactory film strength has not been achieved.

As described above, as for the magnesium fluoride produced by thermal disproportionation reaction, satisfactory characteristics have not been obtained in terms of low refractive index. In addition, in the magnesium fluoride produced by thermal disproportionation reaction, stability under a high-temperature and high-humidity environment is not satisfactory. Furthermore, satisfactory strength has not been obtained in the magnesium fluoride produced by a wet process.

SUMMARY OF THE INVENTION

The present invention provides a method for producing an optical film having a low refractive index, the method including a thermal disproportionation reaction, an optical film produced by the method, and an optical component having an excellent antireflection performance.

The present invention in its first aspect provides a method for producing an optical film as specified in claims 1 to 7.

The present invention in its second aspect provides an optical film as specified in claim 8.

The present invention in its third aspect provides an optical component as specified in claim 9.

According to the present invention, a fluorine-containing organomagnesium compound is heat-treated in a shielded space to disproportionate the compound, whereby a low refractive index (nd = 1.05 to 1.3) can be realized in a magnesium fluoride film. Thus, it is possible to obtain an optical film having an antireflection effect such as excellent low-reflection characteristics and incident-angle characteristics, and an optical component including the same.

Further features of the present invention will become apparent from the following description of exemplary embodiments with reference to the attached drawings.

BRIEF DESCRIPTION OF THE DRAWINGS

Figs. 1A and 1B are schematic views showing an embodiment of states in a shielded space in a step of heat treatment in the present invention.

Figs. 2A and 2B are schematic views showing an embodiment of states in a shielded space in the step of heat treatment in the present invention.

Figs. 3A to 3C are schematic views showing an embodiment of states in a shielded space in the step of heat treatment in the present invention.

Fig. 4 is a graph showing the results of the spectral reflectivity obtained in two cases where an optical film of the present invention was provided and in one case where an optical film of the present invention was not provided.

Fig. 5 is a graph showing the results of the spectral reflectivity before and after an environmental test of Example 23.

Fig. 6 is a graph showing the results of the spectral reflectivity before and after an environmental test of Comparative Example 1.

DESCRIPTION OF THE EMBODIMENTS

Embodiments of the present invention will now be described in detail. According to a method for producing an optical film of the present invention, a method for producing an optical film formed of a porous film containing magnesium (Mg) and fluorine (F) includes the steps of applying, onto a base, a solution containing a fluorine-containing organomagnesium compound represented by general formula (1):

$$(CF_3\text{-}X\text{-}COO)_2Mg \qquad \text{General formula (1)}$$

wherein X represents a single bond or $-(CF_2)_n$-, $-(CH_2)_m$-, or $-(CF_2)_n$-$(CH_2)_m$- which may have a substituent, and n and m each represent an integer of 1 to 4, to form a coating film, and heat-treating the coating film in a shielded space to obtain a porous film containing Mg and F.

The inventors of the present invention have found that, in a method for producing an optical film containing Mg and F, in order to obtain an optical film having a low refractive index in a reaction in which a fluorine-containing organomagnesium compound is disproportionated by heat treatment to cause fluorination of magnesium, the reaction atmosphere is important.

It is believed that when a magnesium fluoride film is prepared by thermal disproportionation reaction of a fluorine-containing organomagnesium compound, separation of a fluorine atom is caused by heating, and the separated fluorine atom is replaced with a bond between magnesium and a carboxylic acid, thereby producing magnesium fluoride. Accordingly, in producing magnesium fluoride, it is necessary to efficiently use fluorine atoms generated by heating.

In the present invention, a coating film containing the fluorine-containing organomagnesium compound represented by general formula (1) may be heat-treated in an atmosphere containing a fluorine compound in a shielded space.

Here, the atmosphere containing a fluorine compound may be an atmosphere doped with fluorine gas or the like. Alternatively, the atmosphere may be formed by using a fluorine compound which is a decomposition product generated in thermal decomposition or disproportionation of the fluorine-containing organomagnesium compound applied onto a base or a fluorine compound mixed in a coating solution.

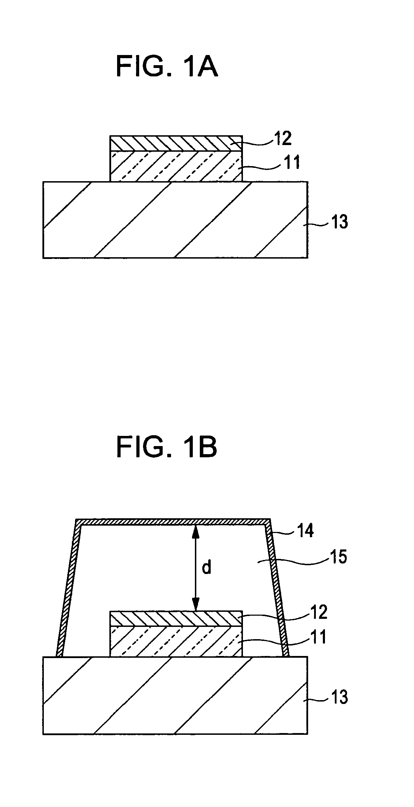

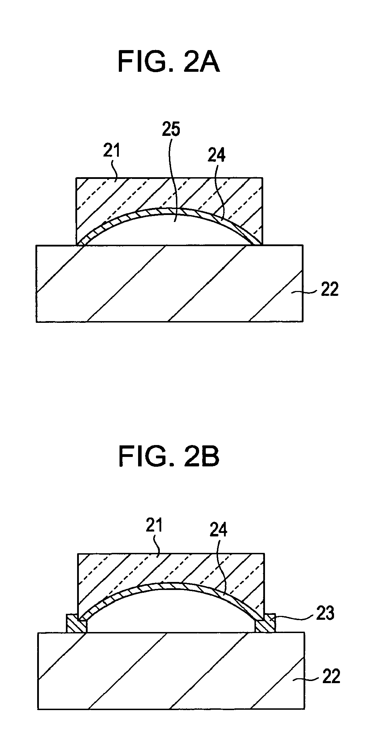

In order to control the concentration of the fluorine compound in the atmosphere of the shielded space, it is effective to cover the base with a covering member so that the base is shielded from the outside. Figs. 1A and 1B are schematic views showing an embodiment of states in a shielded space in a step of heat treatment in the present invention. Reference numeral 11 indicates a base (support), reference numeral 12 indicates a coating film, reference numeral 13 indicates a heating device, reference numeral 14 indicates a covering member, and reference numeral 15 indicates a shielded space. It is sufficient that the covering member prevents a fluorine compound produced in doping, thermal decomposition, or disproportionation from vaporizing, and can withstand heating. A metal, glass, or a ceramic material is suitably used as the covering member. The base itself may be used as the covering member depending on the shape of the base. As shown in Figs. 2A and 2B, when the base has a convex shape, covering can be performed by using a space formed by the base itself. As the heating device, a known device such as a hotplate using heating wires, an oven, a hot air dryer, a vacuum dryer, or an infrared lamp can be used. The heating temperature may be in the range of 260°C or higher and lower than 500°C. When the heating temperature is 500°C or higher, a metal oxide is produced rather than a metal fluoride, thereby increasing the refractive index. On the other hand, when the heating temperature is lower than 260°C, fluorination is not caused by only heating and a desired reaction product cannot be obtained. The heat treatment time is in the range of 5 minutes to 10 hours, and more preferably 10 minutes to 2 hours. When the heat treatment time is shorter than 5 minutes, the temperature of the base does not sufficiently increase and the reaction is not sufficient. The covering member need not be closely joined to the heating device. An object of the present invention can be achieved by placing a bowl produced by press-working an aluminum plate having a thickness of 0.5 mm on a flat-shaped heating device.

Fig. 1A shows a state in which no covering member is arranged. In this case, since the coating film 12 is exposed, a fluorine compound is vaporized into the atmosphere. Fig. 1B shows a state in which a shielded space is formed using a covering member in the present invention. Since the coating film 12 is covered with the covering member 14 so as to be shielded from the outside, a fluorine compound is retained in the shielded space 15.

By changing the volume of the shielded space, it is possible to control the concentration of the fluorine compound which is a decomposition product generated in thermal decomposition or disproportionation of a fluorine-containing organomagnesium compound applied onto the base or a fluorine compound mixed in a coating solution. As a result, the refractive index of the prepared film can be controlled to be a desired value.

For example, when a dimension of the shielded space is represented by the distance d between the coating film 12 and the covering member 14, as shown in Fig. 1B, the distance d is 100 mm or less, and preferably 1 mm or more and 50 mm or less. The shielded space is determined in accordance with the area of the coating film. A value V/S calculated by dividing the volume V ($mm^3$) of the shielded space by the surface area S ($mm^2$) of the coating film is preferably in the range of 1 to 1,000 and more preferably in the range of 10 to 300. When the value V/S is less than 1, the formed film becomes too brittle. On the other hand, when the value V/S exceeds 1,000, the advantage of the shielding cannot be sufficiently obtained.

The fluorine-containing organomagnesium compound preferably has a trifluoromethyl group ($CF_3$ group). Examples of such a fluorine-containing organomagnesium compound having a $CF_3$ group include magnesium fluorinated carboxylates, magnesium fluoride alkoxides, and magnesium fluoride acetylacetonato. Among these compounds, magnesium fluorinated carboxylates are excellent in the stability of a coating solution, and are suitable for the thermal disproportionation reaction. The fluorine-containing organomagnesium compound represented by general formula (1) below may be obtained by allowing magnesium or a magnesium compound to react with a fluorinated carboxylic acid.

$$(CF_3\text{-X-COO})_2Mg \qquad \text{General formula (1)}$$

In general formula (1), X represents a single bond or $-(CF_2)_n$-,-$(CH2)_m$-, or $-(CF_2)_n$-$(CH_2)_m$- which may have a substituent, and n and m each represent an integer of 1 to 4.

Examples of X include a single bond, $-CF_2$-,-$(CF_2)_2$-, $-(CF_2)_3$-, $-(CF_2)_4$-, $-CH_2$-, and $-CH_2CF_2$-. Examples of the usable magnesium compound include magnesium acetate and magnesium alkoxides.

The fluorinated carboxylic acid may have a trifluoromethyl group ($CF_3$ group) at an end thereof, and may be a compound represented by general formula (2):

$$CF_3\text{-X-COOH} \qquad \text{General formula (2)}$$

wherein X represents a single bond or $-(CF_2)_n$-, $-(CH_2)_m$-, or $-(CF_2)_n$-$(CH_2)_m$- which may have a substituent, and n and m each represent an integer of 1 to 4.

Specific examples of the fluorinated carboxylic acid represented by general formula (2) include perfluorocarboxylic acids such as trifluoroacetic acid ($CF_3COOH$), pentafluoropropionic acid ($CF_3CF_2COOH$), heptafluorobutyric acid ($CF_3(CF_2)_2COOH$), nonafluorovaleric acid ($CF_3(CF_2)_3COOH$), and undecafluorohexanoic acid ($CF_3(CF_2)_4COOH$); and fluorocarboxylic acids having a substituent. Fluorinated carboxylic acids are fluorinated by heating and are preferable in terms of, for example, the balance of the strengths of bonding between magnesium and an organic compound. A fluorinated carboxylic acid prepared by reacting in a solution may be used. Alternatively, a fluorinated carboxylic acid may be taken out after a reaction and may then be dissolved again and used.

The following reaction formulae represent specific examples in the case where magnesium or a magnesium compound is allowed to react with trifluoroacetic acid serving as the fluorinated carboxylic acid.

$$(CH_3COO)_2Mg + 2CF_3COOH \rightarrow (CF_3COO)_2Mg + 2CH_3COOH \qquad (I)$$

$$Mg(C_2H_5OH) + 2CF_3COOH \rightarrow (CF_3COO)_2Mg + 2C_2H_5OH \qquad (II)$$

$$Mg + 2CF_3COOH \rightarrow (CF_3COO)_2Mg + H_2 \qquad (III)$$

Among these reactions, reactions (I) and (II) are equilibrium reactions in a solution. In reactions (I) and (II), a step of isolating a magnesium fluorinated carboxylate is necessary, or it is necessary to use an excessive amount of trifluoroacetic acid. In order to prepare a magnesium fluorinated carboxylate, reaction (III) between magnesium metal and a fluorinated carboxylic acid is suitable.

A fluorine-containing organomagnesium compound is dissolved in an organic solvent, and the resulting solution is then applied onto a base to form a coating film. Examples of a method for forming the coating film include a dipping method, a spin-coating method, a spray method, a printing method, and a flow-coating method. These known methods may be used alone or in combinations as required. The film thickness can be controlled by, for example, changing a pull-up speed in the dipping method, by changing the rotational speed of a substrate in the spin-coating method, or changing the concentration of the coating solution.

The thickness of the coating film is reduced to about 1/2 to 1/10 by the thermal disproportionation reaction. The degree of reduction varies depending on the degree of shielding during the disproportionation reaction. In any case, the thickness of the coating film is adjusted so that the film thickness d after the thermal disproportionation reaction is integral multiple of an optical film thickness $\lambda/4$ at the design wavelength $\lambda$.

Examples of the organic solvent include alcohols such as methanol, ethanol, propanol, isopropyl alcohol, butanol, ethylene glycol, and ethylene glycol-mono-n-propyl ether; aliphatic and alicyclic hydrocarbons such as n-hexane, n-octane, cyclohexane, cyclopentane, and cyclooctane; aromatic hydrocarbons such as toluene, xylene, and ethylbenzene; esters such as ethyl formate, ethyl acetate, n-butyl acetate, ethylene glycol monomethyl ether acetate, ethylene glycol monoethyl ether acetate, and ethylene glycol monobutyl ether acetate; ketones such as acetone, methyl ethyl ketone, methyl isobutyl ketone, and cyclohexanone; ethers such as dimethoxyethane, tetrahydrofuran, dioxane, and diisopropyl ether; chlorinated hydrocarbons such as chloroform, methylene chloride, carbon tetrachloride, and tetrachloroethane; and aprotic polar solvents such as N-methylpyrrolidone, dimethylformamide, dimethylacetamide, and ethylene carbonate. In preparation of the coating solution used in the present invention, among the above various types of solvents, alcohols can be used from the standpoint of the stability of the solution.

The organic solvent is adequately selected in accordance with the coating method. When the evaporation rate is too high, unevenness of coating tends to occur. In such a case, the problem can be suppressed by using a solvent having a low vapor pressure. After the fluorine-containing organomagnesium compound is applied onto the base, disproportionation reaction is conducted by heat treatment, whereby the fluorine-containing organomagnesium compound is converted to magnesium fluoride. Thus, an optical film composed of porous magnesium fluoride is formed.

The fluorine-containing organomagnesium compound is converted to magnesium fluoride by the thermal disproportionation reaction. In this case, the ease of discharging fluorine atoms by heat is important. The fluorine-containing organomagnesium compound may have a trifluoromethyl group ($CF_3$ group) as a terminal group that easily discharges fluorine atoms by heating.

The heat-treatment temperature is different depending on the type of fluorine-containing organomagnesium compound used. In the case of magnesium trifluoroacetate, thermal disproportionation reaction occurs at 250°C or higher. In this step, when the atmosphere contains a fluorine compound, fluorination is further accelerated and the formation of a porous structure further proceeds, thereby realizing a low refractive index. In this step, the formation of the porous structure is further accelerated by heating. Accordingly, the heating time is preferably in the range of 10 minutes to two hours, and more preferably in the range of 30 minutes to one hour.

In the disproportionation step, the coating film is heat-treated in an atmosphere containing a fluorine compound in a shielded space. The fluorine compound is composed of a decomposition product of the fluorine-containing organomagnesium compound represented by general formula (1). Furthermore, in order to increase the amount of fluorine compound in the atmosphere in the disproportionation step, it is also effective to further add a fluorine compound to the coating solution. Examples of the fluorine compound added include fluorinated carboxylic acids and fluorinated alcohols. Alternatively, fluorine gas may be added to the shielded space.

The disproportionation reaction in which a fluorine-containing organomagnesium compound (represented by a simplified structural formula F-X-Mg) is converted to magnesium fluoride is simply represented by the following formula.

$$F\text{-}X\text{-}Mg \rightarrow F\text{-}Mg + X$$

Here, (A) a fluorine atom is separated by heating, (B) the fluorine atom cleaves the bond between Mg and X, and (C) a reaction of the formation of Mg-F proceeds.

However, since fluorine atoms have high reactivity, the above reaction (B) does not necessarily occur. It is believed that the fluorine atoms generated in the reaction (A) may be scattered outside the system, and the expected reaction (C) thereby does not occur. Thus, fluorination in the disproportionation step does not necessarily proceed as described in the above reaction formula.

In the present invention, by preventing fluorine atoms generated in the reaction (A) from scattering, the fluorination reaction by disproportionation can be more efficiently conducted. As for an effective method for preventing the fluorine atoms from scattering, the outside of a coating film for forming an optical film in the present invention may be covered with a covering member so that the coating film is shielded from the outside, or another fluorine source may be introduced in order to accelerate the reaction. Furthermore, in some shapes of the base, the base itself can be used as a shield.

Figs. 2A and 2B are schematic views showing another embodiment of states in a shielded space in the step of heat treatment in the present invention. Reference numeral 21 indicates a base, reference numeral 22 indicates a heating device, reference numeral 23 indicates an auxiliary member, and reference numeral 24 indicates a coating film for forming an optical film. For example, when the base has a concave lens-like shape, as shown in Figs. 2A and 2B, the base 21 is placed on the heating device 22 either directly (Fig. 2A) or with the auxiliary member 23 (Fig. 2B) therebetween so that the coating film 24 provided on a concave surface of the base 21 is disposed on the lower side. Thus, the disproportionation reaction can be conducted without scattering fluorine atoms.

Reference numeral 25 indicates a shielded space.

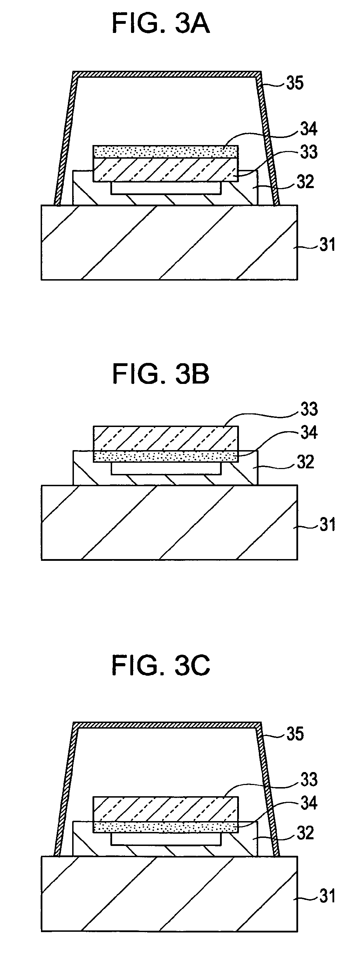

For an optical lens or the like, in order to prevent scratches from being formed on a surface, as shown in Fig. 2B and Figs. 3A to 3C, the auxiliary member 23 or an auxiliary member 32 may be provided under the base. Also in this case, it is important that the auxiliary member be configured so as to shield an optical film. Figs. 3A to 3C are schematic views showing another embodiment of states in a shielded space in the step of heat treatment in the present invention. Reference numeral 31 indicates a heating device, reference numeral 32 indicates an auxiliary member, reference numeral 33 indicates a base, reference numeral 34 indicates an optical film, and reference numeral 35 indicates a covering member. Fig. 3A shows a state in which the base 33 having a coating film thereon is covered with the covering member 35. Fig. 3B shows a state in which the base 33 having a coating film thereon is covered with the auxiliary member 32. Fig. 3C shows a state in which the base 33 having a coating film thereon is covered with both the auxiliary member 32 and the covering member 35.

An atomic ratio F/Mg of the porous film containing magnesium (Mg) and fluorine (F) is preferably in the range of $1.4 \leq F/Mg \leq 1.8$, and more preferably in the range of $1.4 \leq F/Mg \leq 1.6$. If the ratio F/Mg is less than 1.4, the amount of portion other than Mg-F is large, and thus the refractive index increases. On the other hand, if the ratio F/Mg exceeds 1.8, the porosity is too high, and as a result, the film strength becomes insufficient.

The portion other than Mg-F is a portion in which fluorination of magnesium does not occur, and it is believed that functional groups (such as -O- and -OH) other than fluorine are present in the portion. The fluorination ratio can be changed by changing the volume of the space shielded by the covering member. By changing the volume of the space, the strength and the refractive index of the porous film can be controlled to be desired values. At the same time, environmental characteristics of the film are degraded by the presence of the portion other than fluorine.

The porous film in the present invention is formed by heating a coating film containing a fluorine-containing organomagnesium compound to conduct disproportionation reaction and crystallization. The porosity is determined by measuring the specific surface area/pore size distribution by a gas absorption method. For a thin film sample, the porosity can be determined by measuring the refractive index by ellipsometry.

A silicon oxide precursor having high affinity, or furthermore, having reactivity with the portion other than fluorine may be applied onto a porous film composed of magnesium fluoride (F/Mg < 2) thus prepared and then hardened. Thus, an optical film having a high strength and a low refractive index can be prepared. In this case, a solution containing the silicon oxide precursor may be applied onto the porous film, and heat treatment may then be performed to form a silicon oxide binder.

Examples of the silicon oxide precursor that can be used include silicon alkoxides, silazanes, and polymers thereof. Among these, polysilazanes, which have higher reactivity, are preferable. Examples of alkoxy groups contained in each of the silicon alkoxides include lower alkoxy groups such as an ethoxy group, a propoxy group, an isopropoxy group, a butoxy group, and isobutoxy group. The alkoxy groups may be the same or different.

Examples of the polysilazanes include a polysilazane that substantially contains no organic groups (perhydropolysilazane); polysilazanes in which an alkyl group, an alkenyl group, an aryl group, a cycloalkyl group, or a group in which at least one of hydrogen atoms bonded to a carbon atom of any of these groups is replaced with a substituent is bonded to a silicon atom; polysilazanes in which a hydrolyzable group such as an alkoxy group is bonded to a silicon atom; and polysilazanes in which an organic group such as an alkyl group is bonded to a nitrogen atom.

A hardening reaction of the silicon oxide precursor can be accelerated by using a catalyst. When the silicon oxide precursor is a silicon alkoxide, an acid catalyst or a base catalyst can be used. When the silicon oxide precursor is a silazane, an amine compound, a metal catalyst, or a compound of the metal catalyst can be used as the catalyst.

A solution prepared by diluting the silicon oxide precursor with a solvent is applied onto the porous magnesium fluoride film. When a silazane or a polymer thereof is used, it is important that a hydrophobic solvent be used because the silazane or the polymer has high reactivity. Examples of the hydrophobic solvent include petroleum solvents, such as xylene and toluene, and dibutyl ether.

When a silazane is used, it is important that the hardening reaction be suppressed by adding the catalyst during or after the dilution of the silazane with the hydrophobic solvent. The silicon oxide precursor-containing solution applied onto the porous magnesium fluoride film contains silicon (Si) preferably in the range of $0.001 \leq SiO_2 \leq 0.1$, and more preferably in the range of $0.005 \leq SiO_2 \leq 0.05$ on a silica basis. If $SiO_2 < 0.001$, the amount of precursor functioning as a binder is not sufficient, and the strength of the resulting film is not sufficient. If $SiO_2 > 0.1$, the refractive index of the resulting film becomes high, though the strength of the film increases.

Herein, the phrase "on a silica basis" refers to the solid content after the solution containing the silicon oxide precursor is completely reacted. When a solution containing a silicon oxide precursor in an amount of 10% by mass on a silica basis is completely reacted, a baked product containing 10% by mass of silica ($SiO_2$) can be obtained. However, this does not apply to the case where the solution is not completely converted to $SiO_2$, for example, the case where the resulting product is organically modified.

The silicon oxide precursor is hardened by heating. Some silazanes having higher reactivity than that of alkoxides are converted to silica at room temperature. Silica having a higher density is formed by providing moisture or applying heat.

According to the present invention, an optical film having low-refractive-index characteristics is prepared by thermal disproportionation reaction, and a silicon oxide binder having high reactivity is then formed, whereby an optical film having a low refractive index and a high strength can be obtained. Furthermore, an optical component having an excellent antireflection performance can be obtained by using the optical film.

By controlling the degree of fluorination, the refractive index of the optical film to be prepared can be controlled. In addition, by controlling the degree of fluorination, the film strength of the resulting magnesium fluoride film can be improved by the presence of a portion that is not fluorinated or a portion other than fluorine.

Furthermore, by forming the silicon oxide binder that reacts with or covers the portion other than the fluorinated portion, the film strength can be increased, and in addition, the durability in the operating environment can be improved. In addition, an optical film obtained by preparing a porous magnesium fluoride by disproportionation reaction, applying a silicon oxide precursor having high affinity, or further having reactivity with a portion other than fluorine onto the porous magnesium fluoride, and then baking the silicon oxide precursor has a low refractive index (nd = 1.1 to 1.3) and such a high film strength that scratches are not formed even when the surface is rubbed.

Furthermore, the stability of the optical film in a high-temperature and high-humidity environment can be improved by applying and baking the silicon oxide precursor. The reason for this is believed to be as follows. A portion of magnesium that is not subjected to fluorination or a portion that becomes unstable in a high-temperature and high-humidity environment because of the presence of the other functional groups (e.g., -O- and -OH) is reacted or covered with the silicon oxide precursor, thereby improving the stability to the environment.

According to the optical film formed of a porous film of the present invention, a refractive index nd of 1.05 or more and 1.3 or less, which is significantly lower than that of bulk magnesium fluoride (nd = 1.38), can be achieved by forming a porous structure.

Even when the silicon oxide binder is provided on the porous film, the refractive index nd is 1.1 or more and 1.3 or less, which is also significantly lower than that of bulk magnesium fluoride (nd = 1.38).

Various types of glass are used as the base in the present invention. Specific examples of the glass include various types of optical glass such as alkali-free glass, aluminosilicate glass, borosilicate glass, high-refractive-index, low-dispersion glass containing barium or a rare earth, and fluorine-containing low-refractive-index glass.

Layers for providing various functions may be further provided in the optical film of the present invention. For example, in order to improve the adhesiveness between a transparent base and a hard coat layer, an adhesive layer or a primer layer may be provided therebetween. The refractive index of such a layer provided between a transparent base and a hard coat layer as described above may be an intermediate value between the refractive index of the transparent base and the refractive index of the hard coat layer.

An optical component having an excellent antireflection performance can be realized by using such an optical film having a low refractive index alone or in combination with a multilayer film. When the optical film is used as the top layer of a multilayer film structure, interface reflection can be decreased and oblique-incidence characteristics can be improved because of the low refractive index of the optical film.

The optical film of the present invention can be applied to various optical components. The optical film can also be used in a camera lens, binoculars, a display apparatus such as a projector, window glass, or the like.

EXAMPLES

The present invention will now be described in detail by way of Examples.

EXAMPLE 1

Sample for measurement of reflectivity and refractive index

A synthetic quartz substrate having a diameter of 30 mm and a thickness of 1 mm was cleaned using ultrasonic waves in isopropyl alcohol and then dried. This substrate was used as a substrate for coating.

A coating solution was prepared by adding 10 parts by mass of trifluoroacetic acid little by little to 1 part by mass of magnesium ethoxide (produced by ALDRICH) and 15 parts by mass of isopropyl alcohol. According to $^{19}$F-NMR analysis, it was confirmed that the magnesium ethoxide and the trifluoroacetic acid reacted to each other and were dissolved in the solvent to produce magnesium trifluoroacetate.

The coating solution was spin-coated on the quartz substrate at a rotational speed of 2,000 rpm. The quartz substrate was placed on a hotplate, with an aluminum member having a clearance of 1 mm therebetween, so that scratches were not formed on the reverse face of the quartz substrate, and heated at 300°C for one hour. In this step, the coated substrate was covered with a stainless steel cover (outer size: 116 x 75 mm, depth: about 5 mm) serving as a covering member so that decomposition products during thermal disproportionation reaction were not evaporated.

Next, the refractive index nd of the prepared film was measured with an ellipsometer. The results of the refractive indices are shown in Table 1.

Measurement of refractive index

The analysis of the refractive index and the film thickness were conducted by ellipsometry in a wavelength range of 190 to 1,000 nm using a spectroscopic ellipsometer (M-2000D available from J. A. Woollam Japan Co., Inc.). Measurement of F/Mg ratio

A film was formed on a silicon substrate by the same method as used for preparing the above sample for the measurement of the reflectivity and refractive index. Fluorescence X-ray analysis of the prepared film was conducted with a scanning fluorescence X-ray spectrometer (ZSX100e, produced by Rigaku Corporation) to determine a fluorine/ magnesium (F/Mg) ratio. The results are shown in Table 1.

Calculation of V/S

The value of V/S was calculated from the coating surface area S (mm$^2$) of the base and the volume V (mm$^3$) of the shielded space formed by the covering member. When no covering member was provided, the value V/S was assumed to be infinite ($\infty$). The results are shown in Table 1. Evaluation of strength of optical film (1)

To evaluate the strength of the optical film, a test "(1) contact only" was conducted by touching the optical film with a clean glove. When the trace remained, the film was evaluated as "C". When no trace was observed, the film was evaluated as "B". The results are shown in Table 1.

Comprehensive evaluation

On the basis of the results of these tests, a comprehensive evaluation was conducted as follows:

A: The refractive index was low, and the strength was excellent.
B: The refractive index was low, and the strength was good.
C (1): The refractive index was high.
C (2): The strength was insufficient.
C (3): The refractive index was high, and the strength was insufficient.

EXAMPLE 2

Twenty parts by mass of trifluoroacetic acid was added to 1 part by mass of magnesium ethoxide, and the magnesium ethoxide was completely dissolved by heating to prepare a brown solution. The solution was cooled to yield a white precipitate. The white precipitate was taken out and then washed with trifluoroacetic acid. The resulting product was dried in vacuum to obtain white crystals.

Two parts by mass of the white crystals were dissolved in 23 parts by mass of isopropyl alcohol to prepare a coating solution. As in Example 1, the prepared coating solution was applied onto substrates to form films, and the evaluation of the films was performed.

EXAMPLE 3

Twenty five parts by mass of trifluoroacetic acid was added to 1 part by mass of a magnesium powder and 18 parts by mass of 1-butanol little by little to dissolve the magnesium powder. After the magnesium powder was completely dissolved, the solution was filtered with a 0.20-$\mu$m filter. The filtrate was dried in vacuum at 140°C to obtain a transparent solid.

Two parts by mass of the transparent solid was dissolved in 25 parts by mass of isopropyl alcohol to prepare a coating solution. As in Example 1, the prepared coating solution was applied onto substrates to form films, and the evaluation of the films was performed.

EXAMPLE 4

Preparation of films and the evaluation thereof were conducted as in Example 3 except that trifluoroacetic acid was changed to pentafluoropropionic acid (CF$_3$CF$_2$COOH, produced by Tokyo Chemical Industry Co., Ltd.), and the baking temperature was changed to 400°C.

EXAMPLE 5

Preparation of films and the evaluation thereof were conducted as in Example 3 except that trifluoroacetic acid was changed to heptafluorobutyric acid ($CF_3(CF_2)_2COOH$, produced by Tokyo Chemical Industry Co., Ltd.), and the baking temperature was changed to 400°C.

EXAMPLE 6

Preparation of films and the evaluation thereof were conducted as in Example 3 except that trifluoroacetic acid was changed to nonafluorovaleric acid ($CF_3(CF_2)_3COOH$, produced by Tokyo Chemical Industry Co., Ltd.), and the baking temperature was changed to 400°C.

EXAMPLE 7

Preparation of films and the evaluation thereof were conducted as in Example 3 except that trifluoroacetic acid was changed to undecafluorohexanoic acid ($CF_3(CF_2)_4COOH$, produced by Tokyo Chemical Industry Co., Ltd.), and the baking temperature was changed to 400°C.

EXAMPLE 8

Preparation of films and the evaluation thereof were conducted as in Example 3 except that trifluoroacetic acid was changed to 3,3,3-trifluoropropionic acid ($CF_3CH_2COOH$, produced by Tokyo Chemical Industry Co., Ltd.), and the baking temperature was changed to 400°C.

EXAMPLE 9

Samples were prepared and then evaluated as in Example 3 except that the stainless steel cover used in Example 3 was changed to a cylindrical aluminum cover having an inner diameter of 34 mm and a depth of 10 mm.

EXAMPLE 10

Samples were prepared and then evaluated as in Example 3 except that the stainless steel cover used in Example 3 was changed to an aluminum cover having an outer size of 116 x 75 mm and a depth of 10 mm.

EXAMPLE 11

Samples were prepared and then evaluated as in Example 3 except that the stainless steel cover used in Example 3 was changed to an aluminum cover having an outer size of 116 x 75 mm and a depth of 20 mm.

EXAMPLE 12

Samples were prepared and then evaluated as in Example 3 except that the stainless steel cover used in Example 3 was changed to a cover having an outer size of 116 x 75 mm and a depth of 80 mm.

EXAMPLE 13

Samples were prepared and then evaluated as in Example 3 except that the stainless steel cover used in Example 3 was changed to a cylindrical cover having an inner diameter of 34 mm and a depth of 2 mm.

EXAMPLE 14

A plano-concave lens having a diameter of 30 mm and a radius of curvature of 18.17 mm (SLB-30-40N, produced by Sigma Koki Co., Ltd.) was used as a glass substrate for coating. The coating solution of Example 3 was applied onto the concave side of the lens with a spin coater to form a film. The coated plano-concave lens was disposed on a hotplate with an aluminum auxiliary member having a thickness of 1 mm therebetween, as shown in Fig. 2B, and baked such that decomposition products during heating were confined at the concave side of the plano-concave lens. Since the sample had a curvature, the ellipsometry measurement could not be performed. Therefore, the refractive index was estimated from the measured value of the reflectivity (and shown in parentheses in Table 1). COMPARATIVE EXAMPLES 1 to 6

Samples of Comparative Examples 1 to 6 were prepared and then evaluated as in Examples 3 to 8, respectively, except that the heat treatment was conducted without using the cover.

COMPARATIVE EXAMPLE 7

A film was formed by applying the coating solution used in Example 14 on the concave side of a plano-concave lens. The plano-concave lens was placed so that the film was located on the upper side, and baking was then performed without covering the sample. Preparation of the film and the evaluation thereof were conducted as in

Example 14 except for the above.

COMPARATIVE EXAMPLE 8

First, 3.45 parts by mass of magnesium acetate tetrahydrate was dissolved in 48.3 parts by mass of methanol. Next, 1.29 parts by mass of an aqueous solution of hydrofluoric acid (concentration: 50%) was diluted with 50 parts by mass of methanol. This diluted solution was then added dropwise to the above magnesium acetate methanol solution under stirring to synthesize a magnesium fluoride sol solution containing magnesium fluoride fine particles.
Subsequently, 150 parts by mass of the magnesium fluoride sol solution was sealed in a pressure-resistant container (autoclave) composed of Teflon (registered trademark) and heat-treated at a temperature of 120°C for 24 hours. The heat-treated magnesium fluoride sol was concentrated, and then diluted with isopropyl alcohol to prepare a coating solution. The coating solution was spin-coated on substrates for coating to form films as in Example 1, and the films were then baked at 200°C. The evaluation was conducted as in Example 1.

COMPARATIVE EXAMPLE 9

Samples were prepared and then evaluated as in Example 3 except that the stainless steel cover used in Example 3 was changed to a cover having an outer size of 116 x 75 mm and a depth of 100 mm.

COMPARATIVE EXAMPLE 10

Samples were prepared and then evaluated as in Example 3 except that the stainless steel cover used in Example 3 was changed to a cylindrical cover having an inner diameter of 34 mm and a depth of 1.5 mm.

Table 1

| | Material | Sample/Shield | V/S | F/Mg | Refractive index nd | Evaluation of strength, (1) Contact only | Comprehensive evaluation |
|---|---|---|---|---|---|---|---|
| Example 1 | $Mg(C_2H_5O)_2$ + CF3COOH | Flat plate + 5 mm cover | 60.5 | 1.4 | 1.25 | B | B |
| Example 2 | $Mg(C_2H_5O)_2$ + $CF_3COOH$ | Flat plate + 5 mm cover | 60.5 | 1.5 | 1.25 | B | B |
| Example 3 | $Mg + CF_3COOH$ | Flat plate + 5 mm cover | 60.5 | 1.6 | 1.15 | B | B |
| Example 4 | $Mg + CF_3CF_2COOH$ | Flat plate + 5 mm cover | 60.5 | 1.5 | 1.25 | B | B |
| Example 5 | Mg + CF3(CF2)2COOH | Flat plate + 5 mm cover | 60.5 | 1.5 | 1.29 | B | B |
| Example 6 | $Mg + CF_3(CF_2)_3COOH$ | Flat plate + 5 mm cover | 60.5 | 1.5 | 1.27 | B | B |
| Example 7 | $Mg + CF_3(CF_2)_4COOH$ | Flat plate + 5 mm cover | 60.5 | 1.5 | 1.25 | B | B |
| Example 8 | $Mg + CF_3CH_2COOH$ | Flat plate + 5 mm cover | 60.5 | 1.4 | 1.30 | B | B |
| Example 9 | $Mg + CF_3COOH$ | Flat plate + 10 mm cover | 122 | 1.6 | 1.05 | B | B |
| Example 10 | $Mg + CF_3COOH$ | Flat plate + 20 mm cover | 245 | 1.55 | 1.10 | B | B |
| Example 11 | $Mg + CF_3COOH$ | Flat plate + 40 mm cover | 491 | 1.5 | 1.15 | B | B |
| Example 12 | $Mg + CF_3COOH$ | Flat plate + 80 mm cover | 984 | 1.5 | 1.20 | B | B |
| Example 13 | $Mg+CF_3COOH$ | Flat plate + 2 mm cover | 1.6 | 1.8 | 1.05 | B | B |
| Example 14 | $Mg + CF_3COOH$ | Concave lens, Downward direction | 4.2 | Not measured | (1.22) | B | B |

(continued)

| | Material | Sample/Shield | V/S | F/Mg | Refractive index nd | Evaluation of strength, (1) Contact only | Comprehensive evaluation |
|---|---|---|---|---|---|---|---|
| Comparative Example 1 | $Mg + CF_3COOH$ | Flat plate (without cover) | ∞ | 1.3 | 1.32 | B | C (1) |
| Comparative Example 2 | $Mg + CF_3CF_2COOH$ | Flat plate (without cover) | ∞ | 1.35 | 1.33 | B | C (1) |
| Comparative Example 3 | $Mg + CF_3(CF_2)_2COOH$ | Flat plate (without cover) | ∞ | 1.35 | 1.35 | B | C (1) |
| Comparative Example 4 | $Mg + CF_3(CF_2)_3COOH$ | Flat plate (without cover) | ∞ | 1.35 | 1.35 | B | C (1) |
| Comparative Example 5 | $Mg + CF_3(CF_2)_4COOH$ | Flat plate (without cover) | ∞ | 1.3 | 1.32 | B | C (1) |
| Comparative Example 6 | $Mg + CF_3CH_2COOH$ | Flat plate (without cover) | ∞ | 1.3 | 1.35 | B | C (1) |
| Comparative Example 7 | $Mg + CF_3COOH$ | Concave lens, Upward direction | ∞ | Not measured | (1.32) | B | C (1) |
| Comparative Example 8 | $Mg(CH_3COO)_2 + HF$ | Flat plate (without cover) | ∞ | 1.9 | 1.25 | C | C (2) |
| Comparative Example 9 | $Mg + CF_3COOH$ | Flat plate + 100 mm cover | 1230 | 1.3 | 1.31 | B | C (1) |
| Comparative Example 10 | $Mg + CF_3COOH$ | Flat plate + 1.5 mm cover | 0.9 | 1.9 | 1.03 | C | C (2) |

EXAMPLE 15

First, 1.329 parts by mass of tetramethoxysilane (produced by Kishida Chemical Co., Ltd.) was mixed with 1.18 parts by mass of ethanol to prepare a solution. Next, a catalyst solution prepared by mixing 0.03 parts by mass of hydrochloric acid (37%), 1.34 parts by mass of water, and 1.18 parts by mass of ethanol was added dropwise to and mixed with the above solution under stirring, and the resulting mixture was stirred at room temperature for one hour. Subsequently, 100 parts by mass of isopropyl alcohol was added thereto. Thus, an overcoat solution was prepared so as to have a silicon content of 0.005 on a silica basis.

The overcoat solution was applied onto a porous magnesium fluoride film prepared by the same method as in Example 3 under the same spin-coating condition as in Example 1, and was baked at 200°C. Thus, an optical film having a silicon oxide binder thereon was prepared.

To evaluate the strength of the optical film, a test "(1) contact only" was conducted by touching the optical film with a clean glove, and a test "(2) wiping" was conducted by wiping the optical film ten times at a pressure of 250 g/cm$^2$. When the trace remained, the film was evaluated as "C". When no trace was observed, the film was evaluated as "B". The results are shown in Table 2. The refractive index nd of the optical film was measured by the method described in Example 1.

EXAMPLE 16

First, 13.29 parts by mass of tetramethoxysilane was mixed with 11.8 parts by mass of ethanol to prepare a solution. Next, a catalyst solution prepared by mixing 0.3 parts by mass of hydrochloric acid (37%), 13.4 parts by mass of water, and 11.8 parts by mass of ethanol was added dropwise to and mixed with the above solution under stirring, and the resulting mixture was stirred at room temperature for one hour. Subsequently, 500 parts by mass of isopropyl alcohol was added thereto. Thus, an overcoat solution was prepared so as to have a silicon content of 0.01 on a silica basis. A sample was prepared and then evaluated as in Example 15 except for the above.

EXAMPLE 17

First, 13.29 parts by mass of tetramethoxysilane was mixed with 11.8 parts by mass of ethanol to prepare a solution. Next, a catalyst solution prepared by mixing 0.3 parts by mass of hydrochloric acid (37%), 13.4 parts by mass of water, and 11.8 parts by mass of ethanol was added dropwise to and mixed with the above solution under stirring, and the resulting mixture was stirred at room temperature for one hour. Subsequently, 130 parts by mass of isopropyl alcohol was added thereto. Thus, an overcoat solution was prepared so as to have a silicon content of 0.03 on a silica basis. A sample was prepared and then evaluated as in Example 15 except for the above.

EXAMPLE 18

First, 13.29 parts by mass of tetramethoxysilane was mixed with 11.8 parts by mass of ethanol to prepare a solution. Next, a catalyst solution prepared by mixing 0.3 parts by mass of hydrochloric acid (37%), 13.4 parts by mass of water, and 11.8 parts by mass of ethanol was added dropwise to and mixed with the above solution under stirring, and the resulting mixture was stirred at room temperature for one hour. Subsequently, 54 parts by mass of isopropyl alcohol was added thereto. Thus, an overcoat solution was prepared so as to have a silicon content of 0.05 on a silica basis. A sample was prepared and then evaluated as in Example 15 except for the above.

EXAMPLE 19

One part by mass of a polysilazane (Aquamica NN320-20, produced by AZ Electronic Materials), 199 parts by mass of di-n-butyl ether (produced by Kishida Chemical Co., Ltd.), and 0.15 parts by mass of palladium (II) acetate di-n-butyl ether (concentration: 0.1% by mass) were mixed. Thus, a polysilazane overcoat solution was prepared so as to have a silicon content of 0.001 on a silica basis. A sample was prepared and then evaluated as in Example 15 except for the above.

EXAMPLE 20

Two parts by mass of a polysilazane, 198 parts by mass of di-n-butyl ether, and 0.3 parts by mass of palladium (II) acetate di-n-butyl ether (concentration: 0.1% by mass) were mixed. Thus, a polysilazane overcoat solution was prepared so as to have a silicon content of 0.002 on a silica basis. A sample was prepared and then evaluated as in Example 15 except for the above.

EXAMPLE 21

Five parts by mass of a polysilazane, 195 parts by mass of di-n-butyl ether, and 0.75 parts by mass of palladium (II) acetate di-n-butyl ether (concentration: 0.1% by mass) were mixed. Thus, a polysilazane overcoat solution was prepared so as to have a silicon content of 0.005 on a silica basis. A sample was prepared and then evaluated as in Example 15 except for the above.

EXAMPLE 22

Ten parts by mass of a polysilazane, 188.5 parts by mass of di-n-butyl ether, and 1.5 parts by mass of palladium (II) acetate di-n-butyl ether (concentration: 0.1% by mass) were mixed. Thus, a polysilazane overcoat solution was prepared so as to have a silicon content of 0.01 on a silica basis. A sample was prepared and then evaluated as in Example 15 except for the above.

EXAMPLE 23

Fifteen parts by mass of a polysilazane, 183 parts by mass of di-n-butyl ether, and 2 parts by mass of palladium (II) acetate di-n-butyl ether (concentration: 0.1% by mass) were mixed. Thus, a polysilazane overcoat solution was prepared so as to have a silicon content of 0.015 on a silica basis. A sample was prepared and then evaluated as in Example 15 except for the above.

EXAMPLE 24

Twenty parts by mass of a polysilazane, 177 parts by mass of di-n-butyl ether, and 3 parts by mass of palladium (II) acetate di-n-butyl ether (concentration: 0.1% by mass) were mixed. Thus, a polysilazane overcoat solution was prepared so as to have a silicon content of 0.02 on a silica basis. A sample was prepared and then evaluated as in Example 15 except for the above.

EXAMPLE 25

Fifty parts by mass of a polysilazane, 142.5 parts by mass of di-n-butyl ether, and 7.5 parts by mass of palladium (II) acetate di-n-butyl ether (concentration: 0.1% by mass) were mixed. Thus, a polysilazane overcoat solution was prepared so as to have a silicon content of 0.05 on a silica basis. A sample was prepared and then evaluated as in Example 15 except for the above.

EXAMPLE 26

One hundred parts by mass of a polysilazane, 85 parts by mass of di-n-butyl ether, and 15 parts by mass of palladium (II) acetate di-n-butyl ether (concentration: 0.1% by mass) were mixed. Thus, a polysilazane overcoat solution was prepared so as to have a silicon content of 0.1 on a silica basis. A sample was prepared and then evaluated as in Example 15 except for the above.

COMPARATIVE EXAMPLE 11

One hundred and fifty parts by mass of a polysilazane, 30 parts by mass of di-n-butyl ether, and 20 parts by mass of palladium (II) acetate di-n-butyl ether (concentration: 0.1% by mass) were mixed. Thus, a polysilazane overcoat solution was prepared so as to have a silicon content of 0.151 on a silica basis. A sample was prepared and then evaluated as in Example 15 except for the above.
Since the sample was overcoated with a large amount of silica binder, the refractive index nd of the sample was 1.38, which is the same as that of bulk magnesium fluoride. Thus, an advantage as a low-refractive-index film could not be achieved, though the sample had a high film strength.

COMPARATIVE EXAMPLE 12

A sample was prepared by applying the overcoat solution prepared in Example 23 onto the magnesium fluoride film prepared in Comparative Example 8. Evaluation was conducted as in Comparative Example 11 except for the above.

COMPARATIVE EXAMPLE 13

Ten parts by mass of trifluoroacetic acid was added to 1 part by mass of magnesium ethoxide (produced by ALDRICH) and 15 parts by mass of isopropyl alcohol little by little to prepare a $MgF_2$ sol solution.

Next, 13.29 parts by mass of tetramethoxysilane was mixed with 11.8 parts by mass of ethanol to prepare a solution. A catalyst solution prepared by mixing 0.3 parts by mass of hydrochloric acid (37%), 13.4 parts by mass of water, and 11.8 parts by mass of ethanol was added dropwise to and mixed with the above solution under stirring, and the resulting mixture was stirred at room temperature for one hour. Subsequently, 130 parts by mass of isopropyl alcohol was added thereto to prepare a $SiO_2$ sol solution.

Sixty parts by mass of the $MgF_2$ sol solution was mixed with 40 parts by mass of the $SiO_2$ sol solution to prepare a one-component $MgF_2/SiO_2$ coating solution. A sample was prepared by applying this coating solution onto a substrate to form a film by the same method as in Example 1, and then evaluated.

COMPARATIVE EXAMPLE 14

A sample was prepared and evaluated as in Comparative Example 13 except that 50 parts by mass of the $MgF_2$ sol solution was mixed with 50 parts by mass of the $SiO_2$ sol solution.

Table 2

| | Refractive index nd | Si content (on a silica basis) | Evaluation of strength | | Comprehensive evaluation |
|---|---|---|---|---|---|
| | | | (1) Contact only | (2) Wiping | |
| Example 15 | 1.20 | 0.005 | B | B | A |
| Example 16 | 1.22 | 0.01 | B | B | A |
| Example 17 | 1.25 | 0.03 | B | B | A |
| Example 18 | 1.30 | 0.05 | B | B | A |
| Example 19 | 1.16 | 0.001 | B | B | A |
| Example 20 | 1.20 | 0.002 | B | B | A |
| Example 21 | 1.22 | 0.005 | B | B | A |
| Example 22 | 1.23 | 0.01 | B | B | A |
| Example 23 | 1.24 | 0.015 | B | B | A |
| Example 24 | 1.26 | 0.02 | B | B | A |
| Example 25 | 1.29 | 0.05 | B | B | A |
| Example 26 | 1.30 | 0.1 | B | B | A |
| Comparative Example 11 | 1.38 | 0.151 | B | B | C (1) |
| Comparative Example 12 | 1.32 | 0.015 | B | C | C (3) |
| Comparative Example 13 | 1.35 | 0.012 | B | C | C (3) |
| Comparative Example 14 | 1.33 | 0.015 | B | C | C (3) |

Measurement of reflectivity

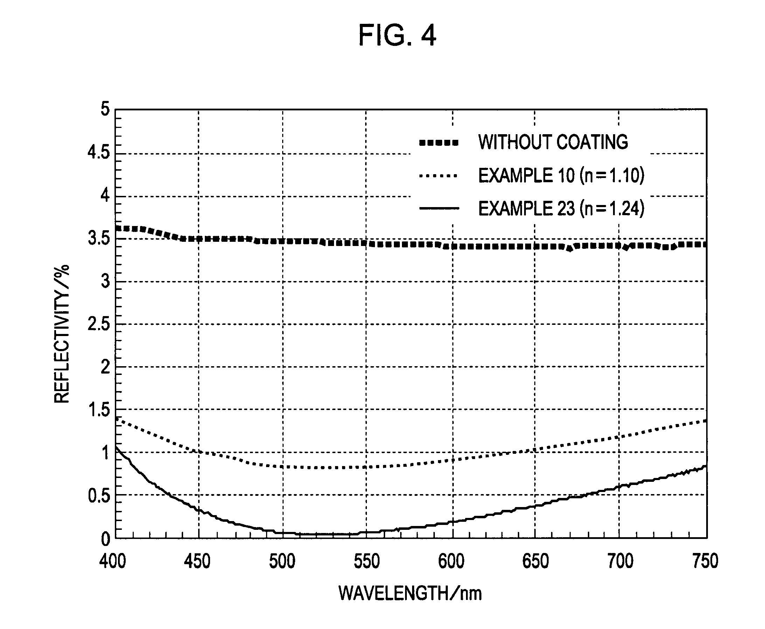

Fig. 4 is a graph showing the results of the spectral reflectivity obtained in two cases where an optical film of the present invention was provided and in one case where an optical film of the present invention was not provided. A lens reflectivity meter (USPM-RU, produced by Olympus Corporation) was used for the measurement. Fig. 4 shows the reflectivity at an angle of incidence of 0 degrees (vertical incidence).

Environmental test

A stability test of the optical films was conducted in a high-temperature and high-humidity environment (60°C, 90RH%, 200 hours) using the samples of Example 23 and Comparative Example 1.

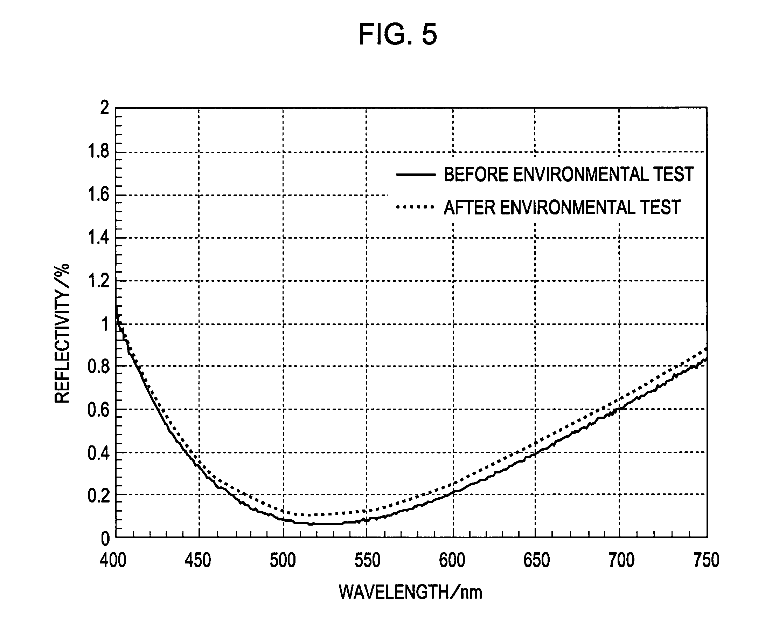

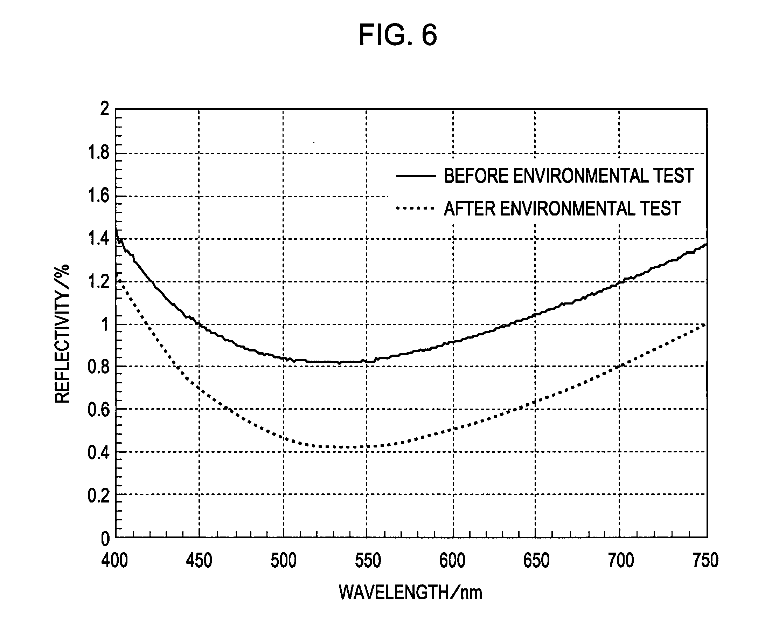

Fig. 5 shows the results of the environmental test of Example 23, and Fig. 6 shows the results of the environmental test of Comparative Example 1. Referring to the figures, when only a magnesium fluoride film formed by heat treatment was provided, the reflectivity of the film changed, whereas excellent durability could be obtained by applying a silicon oxide binder onto such a magnesium fluoride film. According to the method for producing an optical film of the present invention, an optical film having a low refractive index can be obtained by thermal disproportionation reaction. Accordingly, the method can be used for producing an optical film of an optical component having an antireflection performance.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A method for producing an optical film formed of a porous film containing magnesium (Mg) and fluorine (F), the method comprising the steps of:

   applying, onto a base (11), a solution containing a fluorine-containing organomagnesium compound represented by general formula (1):

   $$(CF_3\text{-}X\text{-}COO)_2Mg \qquad \text{General formula (1)}$$

   wherein X represents a single bond or $-(CF_2)_n$-, $-(CH_2)_m$-, or $-(CF_2)_n\text{-}(CH_2)_m$- which may have a substituent, and n and m each represent an integer of 1 to 4, to form a coating film (12); and
   heat-treating the coating film in a shielded space (15) to obtain a porous film containing Mg and F.

2. The method according to Claim 1, wherein the step of heat-treating the coating film in a shielded space is performed in an atmosphere containing a fluorine compound.

3. The method according to Claim 2, wherein the fluorine compound comprises a decomposition product of the fluorine-containing organomagnesium compound represented by general formula (1).

4. The method according to Claim 1, wherein an atomic ratio F/Mg of the porous film containing Mg and F satisfies the relationship $1.4 \leq F/Mg \leq 1.8$.

5. The method according to Claim 1, further comprising the steps of:

   applying a solution containing a silicon oxide precursor onto the porous film; and then
   performing heat treatment to form a silicon oxide binder.

6. The method according to Claim 5, wherein the solution containing the silicon oxide precursor contains silicon (Si) in the range of $0.001 \leq SiO_2 \leq 0.1$ on a silica basis.

7. The method according to Claim 5, wherein the silicon oxide precursor contains a polysilazane.

8. An optical film produced by the method for producing an optical film according to Claim 1 and having a refractive index nd of 1.05 or more and 1.3 or less.

9. An optical component comprising the optical film according to Claim 8.

# FIG. 1A

# FIG. 1B

# FIG. 2A

# FIG. 2B

## FIG. 3A

## FIG. 3B

## FIG. 3C

# FIG. 4

# FIG. 5

FIG. 6

EP 2 325 675 A2

**EP 2 325 675 A2**

## REFERENCES CITED IN THE DESCRIPTION

**Patent documents cited in the description**

- JP 59213643 A
- WO 2002018982 A
- WO 2005120154 A
- WO 2006030848 A